# EUROPÄISCHE PATENTSCHRIFT

(11) **EP 3 173 618 B1**
(45) Veröffentlichungstag und Bekanntmachung des Hinweises auf die Patenterteilung: **05.01.2022**
(21) Anmeldenummer: 15195983.0
(22) Anmeldetag: 24.11.2015
(51) Int. Cl.: F03D 17/00, F03D 80/50

(54) **VERFAHREN ZUM UNTERSUCHEN VON TEILEN VON WINDENERGIEANLAGEN, INSBESONDERE VON ROTORBLÄTTERN**
METHOD FOR THE ANALYSIS OF PARTS OF WIND ENERGY ASSEMBLIES, IN PARTICULAR OF ROTOR BLADES
PROCÉDÉ DE CONTRÔLE D'ÉLÉMENTS D'ÉOLIENNES, EN PARTICULIER PALES DE ROTOR

(43) Veröffentlichungstag der Anmeldung: 31.05.2017
(73) Patentinhaber: Wölfel Beratende Ingenieure GmbH & Co. KG, 97204 Höchberg (DE)
(72) Erfinder: Scholz, Markus, Dr., 97074 Würzburg (DE); Wölfel, Horst-Peter, Prof. Dr.-Ing.,, 97204 Höchberg (DE)
(74) Vertreter: Keil & Schaafhausen Patentanwälte PartGmbB

(56) Entgegenhaltungen:
- WO-A1-2015/075068
- US-A1- 2012 300 059
- US-A1- 2014 363 293
- US-A1- 2015 025 914
- None

## Beschreibung

Die vorliegende Erfindung betrifft ein Verfahren zum Untersuchen von Teilen von Windenergieanlagen, insbesondere von Rotorblättern.

Eine typische Ausführungsform einer Windenergieanlage weist einen Turm auf, der eine Höhe von deutlich über 100 m haben kann. Im Bereich der Spitze des Turms ist eine Gondel angeordnet, die einen Generator beinhaltet, der, ggfs. über ein Getriebe, von einem Rotor angetrieben wird. Der Rotor weist vielfach drei, manchmal zwei, manchmal mehr Rotorblätter auf, die sich bei einer Beaufschlagung durch eine Luftströmung in Rotation versetzen lassen. Ein derartiger Rotor hat vielfach einen Durchmesser von weit über 100 m. Die Spitzen der einzelnen Rotorblätter erreichen damit Geschwindigkeiten von mehreren 100 km/h. Bei derartig großen Geschwindigkeiten ist die Gefahr von Beschädigungen der Rotorblätter sehr groß. Ein beschädigtes Rotorblatt kann weitere Schäden nach sich ziehen, beispielsweise wenn Teile abfallen oder wenn eine merkbare Unwucht erzeugt wird.

US 2014/0363293 A1 beschreibt ein Verfahren zum Bestimmen der Anwesenheit und/oder der Dicke einer Eisschicht auf einem Rotorblatt einer Windturbine. Hier wird aus einem Lichtstrahl ein Referenzlichtstrahl und ein Erfassungslichtstrahl erzeugt. Der Erfassungslichtstrahl wird auf einen Grenzbereich des Rotorblatts gerichtet, an dem sich möglicherweise Eis bilden könnte. Der Erfassungslichtstrahl wird einerseits an dem Rotorblatt, andererseits an der Grenzschicht der Eisschicht reflektiert, wobei sich eine Phasendifferenz zwischen diesen beiden Lichtstrahlen ergibt. Ein daraus kombinierter Lichtstrahl wird mit dem Referenzlichtstrahl verglichen und ergibt eine eindeutige Frequenz, aus der man auf die Dicke der Eisschicht schließen kann.

US 2012/0300059 A1 beschreibt ein Verfahren zum Untersuchen von Komponenten einer Windturbine, bei der man eine Drohne mit einer Kamera an der Windturbine vorbei fliegen lässt und beispielsweise infrarote oder thermische Bilder erzeugt.

In vielen Fällen ist daher eine periodisch durchzuführende Untersuchung erforderlich und ab einer gewissen Anlagengröße auch zwingend vorgeschrieben. Üblicherweise wird eine derartige Untersuchung durch Kletterer durchgeführt, die das Rotorblatt sichten. Hierzu ist es erforderlich, dass sich der Kletterer am Rotorblatt entlang bewegt, so dass er die einzelnen Oberflächenbereiche des Rotorblatts in Augenschein nehmen und gegebenenfalls akustisch und haptisch prüfen kann. Diese Tätigkeit erfolgt in einer relativ großen Höhe über dem Boden oder dem Meeresspiegel. Es sind daher erhebliche Sicherungsmaßnahmen erforderlich. Darüber hinaus benötigt der Kletterer eine gewisse Geschicklichkeit und körperliche Fähigkeiten, um sich gefahrlos an dem Rotorblatt entlang bewegen zu können. Es liegt auf der Hand, dass eine derartige Sichtprüfung aufgrund der widrigen äußeren Umstände nicht immer mit der notwendigen Zuverlässigkeit durchgeführt wird.

Alternativ dazu kann man auch eine Art von Fahrkorb verwenden, der am Rotorblatt entlang geführt wird. Allerdings ist hier ein erheblicher apparativer Aufwand notwendig.

US 2015/0025914 A1 beschreibt ein Verfahren zum Inspizieren von Immobilien mit Hilfe eines unbenannten Flugzeugs, bei dem man aus den Bildern Risikomerkmale ermittelt, um sie der Kalkulation einer Versicherung zu Grunde zu legen.

Der Erfindung liegt die Aufgabe zugrunde, auf einfache Weise zuverlässige Ergebnisse erhalten zu können.

Diese Aufgabe wird bei einem Verfahren nach Anspruch 1 gelöst.

Eine spektrale Signatur beinhaltet eine Information darüber, mit welcher Intensität einzelne Wellenlängen oder Wellenlängenbereiche des vom Oberflächenbereich reflektierten Lichts auftreten. Die Wellenlängen können dabei durchaus auch aus dem nicht sichtbaren Bereich, z.B. UV- und IR-Bereich, stammen. Man macht sich dabei die Erkenntnis zunutze, dass unterschiedliche Materialien auch unterschiedliche spektrale Signaturen haben, so dass man beispielsweise unterscheiden kann, ob der Oberflächenbereich das Material des Rotorblatts, einen Schaden oder Schmutz zeigt. Optische Effekte, wie Reflektion, Schattenwurf, Überbelichtung oder Unterbelichtung beeinträchtigen nicht die spektrale Signatur. Man kann dann durch Betrachten oder Auswerten der ortsaufgelösten spektralen Signaturen mit hoher Zuverlässigkeit Fehlstellen erkennen. Die ortsaufgelöste spektrale Signatur lässt sich als dreidimensionaler Datenkubus darstellen mit zwei räumlichen Achsen und einer Wellenlängenachse. Jeder Ortspixel in einer durch die räumliche Achse aufgespannten Ebene entspricht einem Oberflächenbereich und enthält die Wellenlängeninformation, also die Intensität der einzelnen Wellenlängenbereiche.

Hierbei ist bevorzugt, dass man ein optisches Abbild des Oberflächenbereichs aus der ortsaufgelösten spektralen Signatur gewinnt. Man hat dann eine zusätzliche Information über das Aussehen des zu untersuchenden Teils der Windenergieanlage. Das RGB-Bild ist eine Teilmenge des Datenkubus.

Bevorzugterweise normiert man die ortsaufgelösten spektralen Signaturen des zu untersuchenden Teils einheitlich. Wenn sich beispielsweise bei der Untersuchung eines Rotorblatts oder eines anderen Teils einer Windenergieanlage die Lichtverhältnisse ändern, weil beispielsweise eine Wolke vorbeizieht, dann ändern sich entsprechend auch die Intensitäten der einzelnen Wellenlängen des reflektierten Lichtes. Die Signatur als solche, also die Form und das Intensitätsverhältnis der einzelnen Wellenlängen untereinander, bleibt jedoch zumindest im Wesentlichen gleich. Wenn man eine Normierung vornimmt, dann kann man auf einfache Weise feststellen, ob sich einzelne ortsaufgelöste spektrale Signaturen signifikant unterscheiden oder nicht.

In einer einfachen Vorgehensweise ist vorgesehen, dass man gemäß einer bevorzugten Ausführungsform ortsaufgelöste spektrale Signaturen von Oberflächenbereichen miteinander vergleicht. Hierbei geht man davon aus, dass die Oberfläche eines Rotorblatts oder eines anderen Teils einer Windenergieanlage beispielsweise durchgängig mit dem gleichen Material versehen ist, beispielsweise mit einem Lack. Dementsprechend müssten theoretisch die ortsaufgelösten spektralen Signaturen aller Oberflächenbereiche gleich sein oder sich zumindest in einem vorgegebenen Ähnlichkeitsbereich bewegen. Wenn sich dann bei einzelnen spektralen Signaturen signifikante Unterschiede zu anderen ortsaufgelösten spektralen Signaturen ergeben, ist dies ein Zeichen dafür, dass sich eine Veränderung ergeben hat. Eine derartige Veränderung kann dann als Fehlstelle aufgefasst werden.

Hierbei ist besonders bevorzugt, dass man aus der räumlichen Anordnung von Oberflächenbereichen und Unterschieden ortsaufgelöster spektraler Signaturen der Oberflächenbereiche ein Fehlersignal erzeugt. Man kann beispielsweise die ortsaufgelösten spektralen Signaturen von benachbarten Oberflächenbereichen miteinander vergleichen. Wenn sich z.B. zwei benachbarte Oberflächenbereiche einer ansonsten homogenen Oberflächenstruktur in ihrer ortsaufgelösten spektralen Signatur über eine vorbestimmte Fehlergrenze hinaus unterscheiden, dann ist dies ein Zeichen dafür, dass in einem Oberflächenbereich ein Fehler vorliegt. Eine weitere Indikation für einen möglichen Fehler liegt beispielsweise dann vor, wenn die abweichenden Oberflächenbereiche, also die "Pixel", ein Muster ergeben, beispielsweise eine Ellipse.

Gemäß der Erfindung ist vorgesehen, dass man eine ermittelte ortsaufgelöste spektrale Signatur eines Oberflächenbereichs mit einer zuvor aufgenommenen ortsaufgelösten spektralen Signatur des

Oberflächenbereichs vergleicht und bei Abweichungen, die ein vorbestimmtes Maß übersteigen, ein Fehlersignal erzeugt. Man kann beispielsweise bei der Erstinstallation der Windenergieanlage die ortsaufgelösten spektralen Signaturen der Oberflächenbereiche des zu untersuchenden Teils aufnehmen und abspeichern. Diese ortsaufgelösten spektralen Signaturen sollten sich, da sie materialabhängig sind, im Laufe der Zeit nicht nennenswert verändern. Eine gewisse Veränderung kann durch eine Alterung auftreten. Diese Veränderung kann jedoch bei der Auswertung der ortsaufgelösten spektralen Signaturen berücksichtigt werden. Man kann gemäß einer nicht beanspruchten Alternative dazu auch die spektrale Signatur des Materials, das sich an der Oberfläche befindet, verwenden, wenn diese spektrale Signatur bekannt ist. In vielen Fällen kann die spektrale Signatur eines Materials vom Hersteller des Materials oder einer Prüfstelle, z.B. ein Labor, bezogen werden. Wenn dann die ortsaufgelöste spektrale Situation des Oberflächenbereichs nicht mehr mit der spektralen Signatur des Materials des Oberflächenbereichs übereinstimmt, kann dies ebenfalls ein Hinweis auf eine Fehlstelle sein. Auch ist von Vorteil, wenn man eine ermittelte ortsaufgelöste spektrale Signatur eines Oberflächenbereichs mit mehreren zuvor ermittelten oder bekannten Signaturen vergleicht und in Abhängigkeit von dem Vergleich ein Fehlerart-Signal erzeugt. Eine typische Ausbildung eines Rotorblatts einer Windenergieanlage weist einen Korpus aus einem faserverstärkten Kunststoff, gegebenenfalls mit einem Kern aus gehärtetem Schaum oder Balsaholz, auf, wobei die Matrix beispielsweise aus der Gruppe von EpoxyHarzen gewählt ist. Auf diesen Korpus wird dann eine Grundierung, beispielsweise Gelcoat, und ein Lack, beispielsweise Topcoat, aufgebracht. Gegebenenfalls kann auch eine Spachtelmasse oder ein Kantenschutz vorhanden sein. Der Korpus, die Grundierung, der Lack etc. sind damit aus unterschiedlichen Materialien und weisen unterschiedliche spektrale Signaturen auf. Bei einer beginnenden Beschädigung wird zunächst der Lack beschädigt werden, so dass man bei der Untersuchung am beschädigten Oberflächenbereich nicht mehr die spektrale Signatur des Lacks feststellt, sondern die spektrale Signatur der Grundierung. Ein derartiger Fehler kann beispielsweise als "Lackfehler" klassifiziert werden, der zwar vorgemerkt ist, eine Reparatur aber noch nicht unbedingt erfordert. Zeigt hingegen die spektrale Signatur bereits an, dass das Epoxy-Harz frei liegt, weil der Oberflächenbereich die spektrale Signatur des Epoxy-Harzes zeigt, dann kann hier ein "schwerwiegender Fehler" klassifiziert werden, der eine baldige Reparatur erforderlich macht.

Bevorzugterweise ist die hyperspektrale Kamera an einem Fluggerät montiert und ist mit Hilfe des Fluggeräts an dem zu untersuchenden Teil vorbei bewegbar. Die hyperspektrale Kamera ist hierbei besonders gut geeignet, weil sie relativ kurze Belichtungszeiten in der Größenordnung von 1 ms hat, so dass man auch bei schnellen Bewegungen nur vernachlässigbare Bewegungsunschärfen erhält.

Vorzugsweise verwendet man ein ferngesteuertes Fluggerät. Ein ferngesteuertes Fluggerät kann auch als "Drohne" bezeichnet werden. Die Verwendung einer Drohne hält die Gefahr für eine inspizierende Person klein.

Vorzugsweise überträgt man die optischen Abbilder während der Bewegung der hyperspektralen Kamera zu einem Beobachter. Der Beobachter kann dann optisch nachvollziehen, welche Oberflächenbereiche untersucht worden sind und welche noch nicht, wo also noch eine weitere Untersuchung erforderlich ist.

Bevorzugterweise liest man die spektralen Signaturen in eine Datenbank ein, in der für die einzelnen Oberflächenbereiche Datensätze vorgesehen sind.

Eine derartige Datenbankstruktur ist in besonderem Maße geeignet, die Vielzahl von physikalischen Informationen, die sich aus der spektralen Signatur der vielen Oberflächenbereiche ergeben, mit einfachen Mitteln zu verwalten.

Vorzugsweise bewegt man eine optische Kamera zusätzlich zu der hyperspektralen Kamera am zu untersuchenden Teil vorbei und erzeugt optische Abbilder. Diese optischen Abbilder haben dann vorzugsweise eine höhere Auflösung als die Auflösung der hyperspektralen Kamera. Die optischen Abbilder mit höherer Auflösung können dann den ortsaufgelösten spektralen Signaturen zugeordnet werden, so dass man bei der Entdeckung eines Fehlers, beispielsweise bei einem ausgelösten Fehlersignal, gleichzeitig die Möglichkeit hat, den möglicherweise beschädigten Teil der Oberfläche durch das optische Abbild in Augenschein zu nehmen. Dies erleichtert eine spätere Beurteilung eines Schadens.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung einer spektralen Signatur eines Oberflächenbereichs und
- Fig. 2: spektrale Signaturen von unterschiedlichen Materialien.

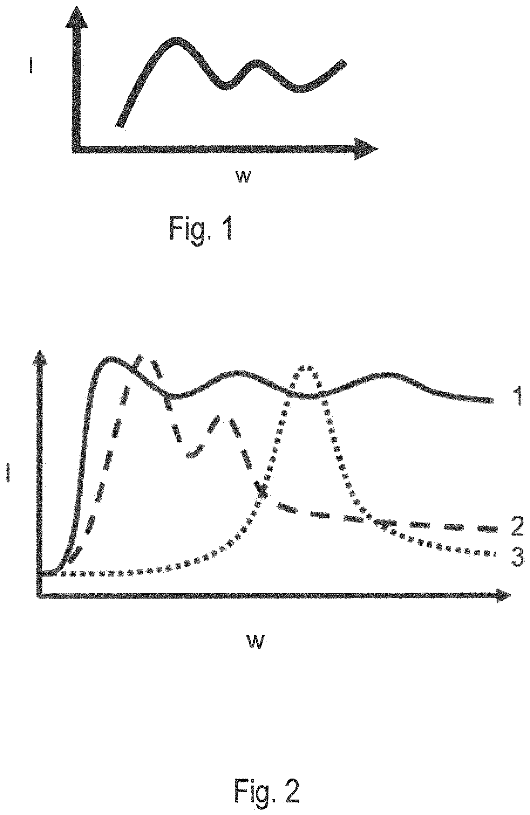

Eine in Fig. 1 dargestellte spektrale Signatur lässt sich kurz als die Intensitätsverteilung über die Wellenlänge von reflektierter Lichtstrahlung bezeichnen. Die Wellenlängen sind hier nicht auf das sichtbare Licht beschränkt, sondern man kann auch Wellenlängen aus dem infraroten und aus dem ultravioletten Bereich verwenden. Eine hyperspektrale Kamera ist in der Lage, derartige Wellenlängenverteilungen für eine Vielzahl von Oberflächenbereichen gleichzeitig zu ermitteln und abzuspeichern. Ein Oberflächenbereich entspricht dabei einem Pixel oder einer Pixelgruppe der hyperspektralen Kamera. Die tatsächliche Größe des Oberflächenbereichs hängt dann von der Entfernung der hyperspektralen Kamera zu der zu untersuchenden Oberfläche ab.

Wenn man nun eine derartige hyperspektrale Kamera an einem Rotorblatt einer Windenergieanlage vorbei fährt, dann kann man mit einer relativ hohen Auflösung Oberflächenbereiche überprüfen. Für jeden Oberflächenbereich, der beispielsweise eine Größe von 1 Pixel oder einigen Pixeln hat, wird dann die ortsaufgelöste spektrale Signatur ermittelt. Gleichzeitig wird für diesen Oberflächenbereich auch ein optisches Abbild erstellt. Das optische Abbild, beispielsweise ein "Farbfoto", kann aus der ortsaufgelösten spektralen Signatur gewonnen werden, die für jeden Oberflächenbereich einen Datensatz aufweist.

Man kann allerdings auch eine zusätzliche Kamera gemeinsam mit der hyperspektralen Kamera an den Oberflächenbereichen vorbei führen und rein optische Bilder mit einer höheren Auflösung erzeugen.

Die hyperspektrale Kamera kann beispielsweise an einer Drohne montiert sein, mit deren Hilfe sie an der Windenergieanlage vorbei bewegt wird. Dies hält Risiken für Menschen, die die Untersuchung oder Inspektion der Windenergieanlage durchführen, klein.

Die hyperspektrale Kamera erzeugt also von jedem Oberflächenbereich mit einer Größe von beispielsweise 50 x 50 cm einen "Schnappschuss", der eine ortsaufgelöste spektrale Signatur beinhaltet. Die Belichtungszeit kann relativ klein sein. Sie liegt in der Größenordnung von 1 ms, also beispielsweise von 0,8 bis 2 ms. Dementsprechend ist es möglich, auch bei einer schnellen Relativbewegung zwischen der Kamera und dem Rotorblatt Bewegungsunschärfen so klein zu halten, dass sie noch akzeptabel sind.

Man geht hierbei von der Überlegung aus, dass die spektrale Signatur von dem Material an der Oberfläche des zu untersuchenden Teils, beispielsweise des Rotorblatts, abhängt. Dementsprechend ist eine eindeutige Identifizierung von Lack, der üblicherweise an der Oberfläche der Teile der Windenergieanlage angebracht ist, möglich und man kann Lack von Schaden, Schmutz und Ähnlichem anhand der spektralen Signatur und der Bildinformation unterscheiden.

Optische Effekte wie Reflektion, Schattenwurf, Überbelichtung oder Unterbelichtung oder dergleichen beeinträchtigen nicht die spektrale Signatur. Möglich ist allerdings, dass sich die Intensität der einzelnen Wellenlängen bei einer starken Lichteinstrahlung vergrößert und bei einer schwächeren Lichteinstrahlung verkleinert. Diese Vergrößerung und Verkleinerung der spektralen Signatur ist zwar nicht vollständig linear. Die "Form" der spektralen Signatur bleibt jedoch erhalten. Man kann daher durch eine Normierung der spektralen Signaturen alle Oberflächenbereiche auf einen gemeinsamen Wert die Vergleichbarkeit der einzelnen spektralen Signaturen wiederherstellen. Beispielsweise kann man alle Intensitäten durch die Intensität eines Untergrunds oder durch einen Mittelwert dividieren.

Beim Vorbeibewegen der hyperspektralen Kamera an dem zu untersuchenden Teil ist es auch nicht unbedingt erforderlich, dass die hyperspektrale Kamera ausschließlich auf das zu untersuchende Teil gerichtet ist. Da die ortsaufgelöste spektrale Signatur ermittelt wird, kann man leicht zwischen dem zu untersuchenden Teil und dem Hintergrund, beispielsweise dem Himmel oder einer Wolke, unterscheiden. Man muss nicht einmal die hyperspektrale Kamera an dem zu untersuchenden Teil vorbeibewegen. Es ist auch möglich, dass sich das zu untersuchende Teil an der hyperspektralen Kamera vorbeibewegt. Dies ist beispielsweise dann möglich, wenn man die hyperspektrale Kamera am Turm oder auf oder in der Gondel positioniert.

Gemäß einer bevorzugten Ausführungsform kann eine Fehlstelle nun ermitteln, indem man beispielsweise die spektralen Signaturen von benachbarten Oberflächenbereichen miteinander vergleicht. Hierbei geht man davon aus, dass benachbarte Oberflächenbereiche mit dem gleichen Material versehen sind, beispielsweise einem Lack. Dementsprechend müsste im fehlerfreien Fall bei homogenen Oberflächen die Signatur des einen Oberflächenbereichs mit der Signatur eines dazu benachbarten Oberflächenbereichs übereinstimmen. Man kann gewisse Fehlergrenzen zulassen und einen Fehler erst dann anzeigen, wenn die spektralen Signaturen von benachbarten Oberflächenbereichen diese Fehlergrenze nicht mehr einhalten.

Man kann auch so vorgehen, dass man bei einer neuen Windenergieanlage oder bei einer neu gewarteten oder reparierten Windenergieanlage die spektralen Signaturen der einzelnen Oberflächenbereiche aufnimmt und abspeichert und die neu ermittelten spektralen Signaturen dann mit den bereits bekannten spektralen Signaturen, die früher aufgenommen worden sind, vergleicht.

Eine bevorzugte Ausführungsform besteht darin, dass man die aktuell ermittelten spektralen Signaturen mit spektralen Signaturen vergleicht, die vom Hersteller des Materials, von einem Prüflabor oder von vorherigen Versuchen mit dem Material stammen. Gewisse Änderungen können sich durch Alterung ergeben. Diese Änderungen lassen sich aber herausrechnen.

Wenn man, wie oben ausgeführt, feststellt, dass sich spektrale Signaturen an einem bestimmten Oberflächenbereich nicht einer zuvor ermittelten oder bekannten Signatur zuordnen lassen, dann deutet dies auf eine Verschmutzung in diesem Oberflächenbereich hin.

In vielen Fällen lässt sich auch eine Fehlerart bestimmen, was anhand von Fig. 2 erläutert werden soll.

Fig. 2 zeigt für verschiedene Materialien die jeweilige spektrale Signatur über die Wellenlänge w, die in der horizontalen Achse aufgetragen ist, wobei die vertikale Achse die Intensität I der einzelnen spektralen Teile wiedergibt.

Eine Kurve 1 zeigt die spektrale Signatur von Epoxy-Harz, das, ggfs. mit einer Faserverstärkung, verwendet wird, um den Korpus eines Rotors zu bilden. Eine Kurve 2 zeigt die spektrale Signatur einer Grundierung und die Kurve 3 zeigt die spektrale Signatur eines Lacks.

Für das nachfolgend erläuterte Beispiel wird davon ausgegangen, dass das Rotorblatt überall einen einheitlichen Aufbau hat, d.h. von innen nach außen gibt es einen Korpus aus einem faserverstärkten Epoxy-Harz, dessen spektrale Signatur in der Kurve 1 dargestellt ist. Auf den Korpus ist eine Grundierung aufgebracht, deren spektrale Signatur in der Kurve 2 dargestellt ist. Ganz außen befindet sich der Lack, dessen spektrale Signatur in der Kurve 3 dargestellt ist.

Sollte das Rotorblatt weitere Materialien aufweisen, beispielsweise eine verstärkte Vorderkante, können weitere spektrale Signaturen hinzukommen.

Wenn man nun bei der Überprüfung in allen Oberflächenbereichen lediglich die spektrale Signatur nach Kurve 3 ermittelt, dann ist dies ein Zeichen dafür, dass an allen Oberflächenbereichen tatsächlich der Lack vorhanden ist und keine Beschädigungen aufgetreten sind.

Wenn man nun in einigen Oberflächenbereichen eine spektrale Signatur nach Kurve 2 ermittelt, dann ist es ein Zeichen dafür, dass hier die Grundierung an die Oberfläche getreten ist, der Lack also beschädigt ist. Wenn also die spektrale Signatur nach Kurve 2 ermittelt wird, ist dies ein Zeichen dafür, dass ein bestimmter Fehler, nämlich "Lack beschädigt" in dem entsprechenden Oberflächenbereich vorliegt.

Wenn hingegen eine spektrale Signatur nach Kurve 1 ermittelt wird, dann ist dies beispielsweise ein Zeichen dafür, dass nicht nur der Lack, sondern auch die Grundierung beschädigt ist, so dass eine dringende Reparatur angezeigt ist.

Sollte eine andere spektrale Signatur ermittelt werden, könnte dies beispielsweise ein Zeichen dafür sein, dass das Rotorblatt ein Loch oder einen Riss hat, was beispielsweise Anlass gibt, die Windenergieanlage stillzusetzen, um weitere Schäden oder Gefahren zu vermeiden.

Wie oben ausgeführt, enthalten die ortsaufgelösten spektralen Signaturen die Informationen über die optischen Abbilder. Eine derartige Datenbank kann dann automatisch abgearbeitet werden, so dass man mit Hilfe einer Auswerteelektronik einen Vergleich zwischen einzelnen spektralen Signaturen relativ schnell vornehmen kann. Auch können größere Mengen an spektralen Signaturen entsprechend gehandhabt werden.

Natürlich ist auch eine optische Auswertung der spektralen Signaturen durch einen Betrachter möglich.

## Patentansprüche

1. Verfahren zum Untersuchen von Teilen von Windenergieanlagen, insbesondere von Rotorblättern, wobei man eine hyperspektrale Kamera verwendet und mit der hyperspektralen Kamera für eine Vielzahl von Oberflächenbereichen des zu untersuchenden Teils eine ortsaufgelöste spektrale Signatur (1, 2, 3) ermittelt, wobei man eine ermittelte ortsaufgelöste spektrale Signatur (1, 2, 3) eines Oberflächenbereichs mit einer zuvor aufgenommenen ortsaufgelösten spektralen Signatur des Oberflächenbereichs vergleicht und bei Abweichungen, die ein vorbestimmtes Maß übersteigen, ein Fehlersignal erzeugt.

2. Verfahren nach Anspruch 1, **dadurch gekennzeichnet, dass** man ein optisches Abbild der Oberflächenbereiche aus den ortsaufgelösten spektralen Signaturen (1, 2, 3) gewinnt.

3. Verfahren nach Anspruch 1 oder 2, **dadurch gekennzeichnet, dass** man die spektralen Signaturen (1, 2, 3) des zu untersuchenden Teils einheitlich normiert.

4. Verfahren nach einem der Ansprüche 1 bis 3, **dadurch gekennzeichnet, dass** man ortsaufgelöste spektrale Signaturen (1, 2, 3) von Oberflächenbereichen miteinander vergleicht.

5. Verfahren nach Anspruch 4, **dadurch gekennzeichnet, dass** das man aus der räumlichen Anordnung von Oberflächenbereichen und Unterschieden in ortsaufgelösten spektralen Signaturen (1, 2, 3) der Oberflächenbereiche ein Fehlersignal erzeugt.

6. Verfahren nach einem der Ansprüche 1 bis 5, **dadurch gekennzeichnet, dass** man eine ermittelte ortsaufgelöste spektrale Signatur (1, 2, 3) eines Oberflächenbereichs mit mehreren zuvor ermittelten oder bekannten Signaturen vergleicht und in Abhängigkeit von dem Vergleich ein Fehlerart-Signal erzeugt.

7. Verfahren nach einem der Ansprüche 1 bis 6, **dadurch gekennzeichnet, dass** die hyperspektrale Kamera an einem Fluggerät montiert ist und mit Hilfe des Fluggeräts an dem zu untersuchenden Teil vorbeibewegbar ist.

8. Verfahren nach Anspruch 7, **dadurch gekennzeichnet, dass** man ein ferngesteuertes Fluggerät verwendet.

9. Verfahren nach Anspruch 7 oder 8, **dadurch gekennzeichnet, dass** man die optischen Abbilder während der Bewegung der hyperspektralen Kamera zu einem Beobachter überträgt.

10. Verfahren nach einem der Ansprüche 1 bis 9, **dadurch gekennzeichnet, dass** man die ortsaufgelösten spektralen Signaturen (1, 2, 3) in eine Datenbank einliest, bei der für die einzelnen Oberflächenbereiche Datensätze vorgesehen sind.

11. Verfahren nach einem der Ansprüche 1 bis 10, **dadurch gekennzeichnet, dass** man eine optische Kamera zusätzlich zu der hyperspektralen Kamera am zu untersuchenden Teil vorbei bewegt und optische Abbilder erzeugt.

## Claims

1. A method for analyzing parts of wind energy assemblies, in particular rotor blades, wherein a hyperspectral camera is used and a spatially resolved spectral signature (1, 2, 3) for a plurality of surface areas of the part to be analyzed is determined with the hyperspectral camera, wherein a determined spatially resolved spectral signature (1, 2, 3) of a surface area is compared with a previously captured spatially resolved spectral signature of the surface area and an error signal is generated in the event of deviations exceeding a predetermined level.

2. The method according to claim 1, **characterized in that** an optical image of the surface areas is obtained from the spatially resolved spectral signatures (1, 2, 3).

3. The method according to claim 1 or 2, **characterized in that** the spectral signatures (1, 2, 3) of the part to be analyzed are uniformly standardized.

4. The method according to any one of claims 1 to 3, **characterized in that** spatially resolved spectral signatures (1, 2, 3) of surface areas are compared with one another.

5. The method according to claim 4, **characterized in that** an error signal is generated from the spatial arrangement of surface areas and differences in spatially resolved spectral signatures (1, 2, 3) of the surface areas.

6. The method according to any one of claims 1 to 5, **characterized in that** a determined spatially resolved spectral signature (1, 2, 3) of a surface area is compared with a plurality of previously determined or known signatures and an error type signal is generated depending on the comparison.

7. The method according to any of claims 1 to 6, **characterized in that** the hyperspectral camera is mounted on a flying device and can be moved past the part to be analyzed by means of the flying device.

8. The method according to claim 7, **characterized in that** a remote-controlled flying device is used.

9. The method according to claim 7 or 8, **characterized in that** the optical images are transmitted to an observer during the movement of the hyperspectral camera.

10. The method according to any one of claims 1 to 9, **characterized in that** the spatially resolved spectral signatures (1, 2, 3) are read into a database in which data sets are provided for the individual surface areas.

11. The method according to one of claims 1 to 10, **characterized in that** in addition to the hyperspectral camera, an optical camera is moved past the part to be analyzed and optical images are generated.

## Revendications

1. Procédé de contrôle d'éléments d'éoliennes en particulier de pales de rotor, sachant qu'on utilise une caméra hyperspectrale et l'on détermine une signature spectrale à résolution locale (1, 2, 3) avec la caméra hyperspectrale pour une pluralité de zones superficielles de l'élément à contrôler, sachant que l'on compare une signature spectrale à résolution locale déterminée (1, 2, 3) d'une zone superficielle à une signature spectrale à résolution locale préalablement enregistrée de la zone superficielle et l'on produit un signal d'erreur en cas d'écarts qui dépassent une mesure prédéfinie.

2. Procédé selon la revendication 1, **caractérisé en ce que** l'on obtient une image optique des zones superficielles à partir des signatures spectrales à résolution locale (1, 2, 3).

3. Procédé selon la revendication 1 ou 2, **caractérisé en ce que** l'on normalise uniformément les signatures spectrales (1, 2, 3) de l'élément à contrôler.

4. Procédé selon l'une quelconque des revendications 1 à 3, **caractérisé en ce que** l'on compare entre elles des signatures spectrales à résolution locale (1, 2, 3) de zones superficielles.

5. Procédé selon la revendication 4, **caractérisé en ce que** l'on produit un signal d'erreur à partir du système spatial de zones superficielles et des différences dans les signatures spectrales à résolution locale (1, 2, 3) des zones superficielles.

6. Procédé selon l'une quelconque des revendications 1 à 5, **caractérisé en ce que** l'on compare une signature spectrale à résolution locale déterminée (1, 2, 3) d'une zone superficielle à plusieurs signatures préalablement déterminées ou connues et l'on produit un signal de type erreur en fonction de la comparaison.

7. Procédé selon l'une quelconque des revendications 1 à 6, **caractérisé en ce que** la caméra hyperspectrale est montée sur un engin volant et peut être déplacée en passant sur l'élément à contrôler à l'aide de l'engin volant.

8. Procédé selon la revendication 7, **caractérisé en ce que** l'on utilise un engin volant télécommandé.

9. Procédé selon la revendication 7 ou 8, **caractérisé en ce que** l'on transmet les images optiques à un observateur pendant le déplacement de la caméra hyperspectrale.

10. Procédé selon l'une quelconque des revendications 1 à 9, **caractérisé en ce que** l'on introduit les signatures spectrales à résolution locale (1, 2, 3) dans une banque de données pour laquelle des jeux de données sont prévues pour les zones superficielles individuelles.

11. Procédé selon l'une quelconque des revendications 1 à 10, **caractérisé en ce que** l'on fait passer une caméra optique en plus de la caméra hyperspectrale sur l'élément à contrôler et l'on produit des images optiques.
